# EUROPEAN PATENT SPECIFICATION

(11) **EP 0 347 793 B1**
(45) Date of publication and mention of the grant of the patent: **28.02.1996**
(21) Application number: 89111079.3
(22) Date of filing: 19.06.1989
(51) Int. Cl.: C08G 59/16, C08L 63/00

(54) **Monocarboxylic acid derivatives of epoxy resins**
Monocarbonsäurederivat von Epoxydharzen
Dérivés monocarboxyliques de résines époxydes

(30) Priority: 22.06.1988 US 210050; 22.06.1988 US 210065
(43) Date of publication of application: 27.12.1989
(73) Proprietor: THE DOW CHEMICAL COMPANY, Midland Michigan 48640-1967 (US)
(72) Inventor: Cavitt, Michael B., Lake Jackson Texas 77566 (US)
(74) Representative: Sternagel, Hans-Günther, Dr.

(56) References cited:
- WO-A-86/03507
- US-A- 3 594 340
- Lee and Neville, Handbook of Epoxy Resins, Chapter 13, p. 1, Mc. Graw Hill (1967).

## Description

The present invention concerns modified epoxy resins. Particularly, it concerns monocarboxylic acid modified aromatic based polyether polyepoxy resins so as to reduce the viscosity of the resin.

Epoxy resins have been employed to prepare coatings, encapsulations, moldings, laminates and the like. However, in many applications they are applied from organic solvents. It is desirable from an environmental standpoint to reduce the viscosity of the epoxy resin so as to reduce the amount of organic solvent necessary to achieve the desired application viscosity. One method for reducing the viscosity of epoxy resin coating compositions is to employ low viscosity additive (see Lee and Neville, Handbook of Epoxy Resins, Chapter 13, page 1, 1967, MaGraw-Hill) In many instances, these additives are expensive and in some instances may be skin sensitizers. It would therefore be desirable to have alternative means for reducing the viscosity of epoxy resins.

The present invention therefore provides an alternative method for reducing the viscosity of epoxy resins.

One aspect of the present invention pertains to an adduct of (A) at least one polyglycidyl ether of a compound selected from the group consisting of (1) a compound containing an average of more than one phenolic hydroxyl group per molecule, and (2) a compound represented by the formula HO-(-A-Y-) n -A-OH; wherein each A is independently a divalent hydrocarbyl group having from 2 to 6 carbon atoms, each Y is independently -S- or -S-S-, and n has a value from 1 to 11; and (B) at least one aliphatic monocarboxylic acid; with the provisos that (i) the ratio of carboxylic acid groups per epoxide group is from 0.01:1 to 0.2:1, (ii) said aliphatic monocarboxylic acid contains from 7 to 15 carbon atoms in the event that a polygylycidyl ether of a compound (1) is employed, and (iii) said aliphatic monocarboxylic acid contains from 6 to 18 carbon atoms in the event that a polyglycidyl ether of a compound (2) is employed.

Another aspect of the present invention pertains to a thermosettable composition comprising the aforementioned adduct and a curing amount of a suitable curing agent therefor.

A further aspect of the present invention pertains to the cured product resulting from subjecting the aforementioned thermosettable composition to conditions sufficient to effect curing thereof.

Another aspect of the present invention pertains to a process for preparing an epoxy resin having a low viscosity which comprises reacting a polyglycidyl ether of a compound containing an average of more than one hydroxyl group per molecule or a polygycidyl ether having the above formula HO-(-A-Y-)ₙ -A-OH with an aliphatic monocarboxylic acid as defined above.

The adducts of the present invention can be prepared by reacting the epoxy resin, component (A), with the monocarboxylic acid, component (B), at a temperature suitably from 110°C to 190°C, more suitably from 140°C to 185°C, more suitably from 155°C to 180°C, most suitably from 160°C to 175°C, for a time sufficient to complete the desired reaction which is suitably from 0.5 to 3, more suitably from 1 to 2, most suitably from 1 to 1.5, hours. At the lower temperatures, longer reaction times are required whereas at the higher temperatures less reaction times are required to complete the reaction. At temperatures above 190°C and at the longer reaction times, undesired reactions may occur such as those disclosed by Karel Dusek (Editor) in "**Epoxy Resins and Composites III**", Advances in Polymer Science, vol. 78, pp 1-59 (1986) and Libor Matejka, Svatopluk Pokomy and Karel Dusek in "Network Formation Involving Epoxide and Carboxyl Groups (Course of the Model Reaction Monoepoxide-Monocarbonic Acid)", **Polymer Bulletin,** vol. 7, pp 123-128 (1982). At temperatures below 110°C, the reaction time becomes longer which may be inconvenient. The reaction can be conducted at any suitable pressure from subatmospheric to superatmospheric; however, atmospheric pressure is preferred.

The epoxy resin and the monocarboxylic acid are employed in amounts which provide a ratio of equivalent of carboxylic acid to epoxide equivalent suitably from 0.01:1 to 0.2:1, more suitably from 0.02:1 to 0.15:1, most suitably from 0.03:1 to 0.1:1.

If desired, the reaction can be conducted in the presence of a suitable catalyst for conducting the reaction between an epoxy group and a carboxylic acid group. Suitable such catalysts include, for example, phosphonium compounds, tertiary amines, and the like.

Suitable tertiary amine catalysts include, for example, triethylamine, tributylamine, benzyldimethylamine, tris(dimethylaminomethyl)phenol, dimethylethanolamine, n-methylmorpholine, and combinations thereof.

Suitable phosphonium compounds include, for example, those disclosed by Dante et al. in U.S. Patent 3,477,990, by Perry in Canadian Patent 893,191 and U.S. Patent 3,948,855, and Tyler, Jr. et al. in U.S. Patent 4,366,295. Particularly suitable phosphonium catalysts include, for example, ethyl triphenyl phosphonium acetate·acetic acid complex, ethyl triphenyl phosphonium chloride, ethyl triphenyl phosphonium iodide, ethyl triphenyl phosphonium phosphate, tetrabutyl phosphonium acetate.acetic acid complex, tetrabutyl phosphonium chloride, tetrabutyl phosphonium iodide, tetrabutyl phosphonium phosphate, and combinations thereof.

The amount of catalyst to be employed is that amount which will effectively catalyze the reaction between the epoxy resin and the monocarboxylic acid. The specific amount of catalyst will depend upon the particular reactants and catalyst being employed. Generally, the catalyst is employed in amounts suitably from 0.0002 to 0.004, more suitably from 0.0004 to 0.002, most suitably from 0.0005 to 0.001, mole of catalyst per epoxide equivalent.

In the event that the afore-mentioned component (A) is a polygycidyl ether of a compound containing an average of more than one phenolic hydroxyl group, suitable aliphatic monocarboxylic acids which can be employed include those represented by the following Formula Ia 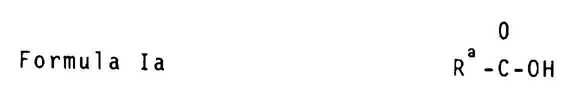 wherein R^{a} is a monovalent aliphatic hydrocarbon group having from 6 to 14 carbon atoms.

In the event that the afore-mentioned component (A) is a polygycidyl ether of a compound represented by the said formula HO-(-A-Y-)-A-OH, the aliphatic monocarboxylic acids which can be employed include those represented by the following formula Ib 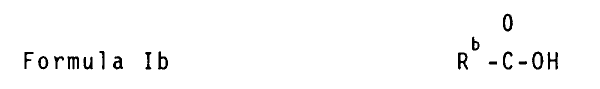 wherein R^{b} is a monovalent aliphatic hydrocarbon group having from 5 to 17, more suitably from 6 to 15, more suitably 7 to 14 and most suitably 8 to 13, carbon atoms.

In either of the two events, components (A) and (B) are preferably employed in amounts which provide a ratio of carboxylic acid groups per epoxide group from 0.02:1 to 0.15:1.

Particularly suitable monocarboxylic acids include, for example, hexanoic acid, heptanoic acid, octanoic acid, pelargonic acid (nonanoic acid), decanoic acid, lauric acid (dodecanoic acid), myristic acid (tetradecanoic acid), pentadecanoic acid and combinations thereof.

Suitable aromatic epoxy resins which can be employed herein include the polyglycidyl ethers of aromatic hydroxyl containing compounds such as, for example, the diglycidyl ethers of dihydroxy aromatic compounds, the polyglycidyl ethers of phenol- or substituted phenol-aldehyde novolac resins, the diglycidyl ethers of phenol- or substituted phenol-cyclopentadiene or oligomers of cyclopentadiene resins and the glycidyl ethers of sulfur containing diols polyols. Particularly suitable epoxy resins include, those represented by the following Formulas II, III, IV and V, VI and VII: 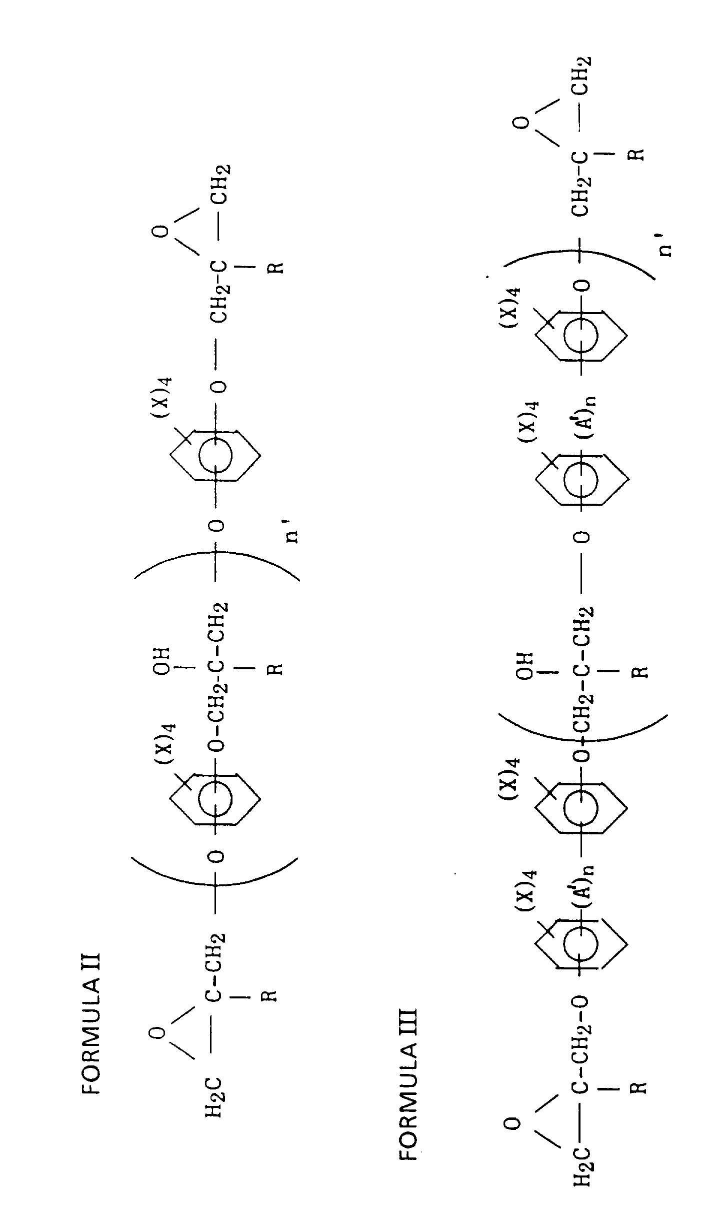 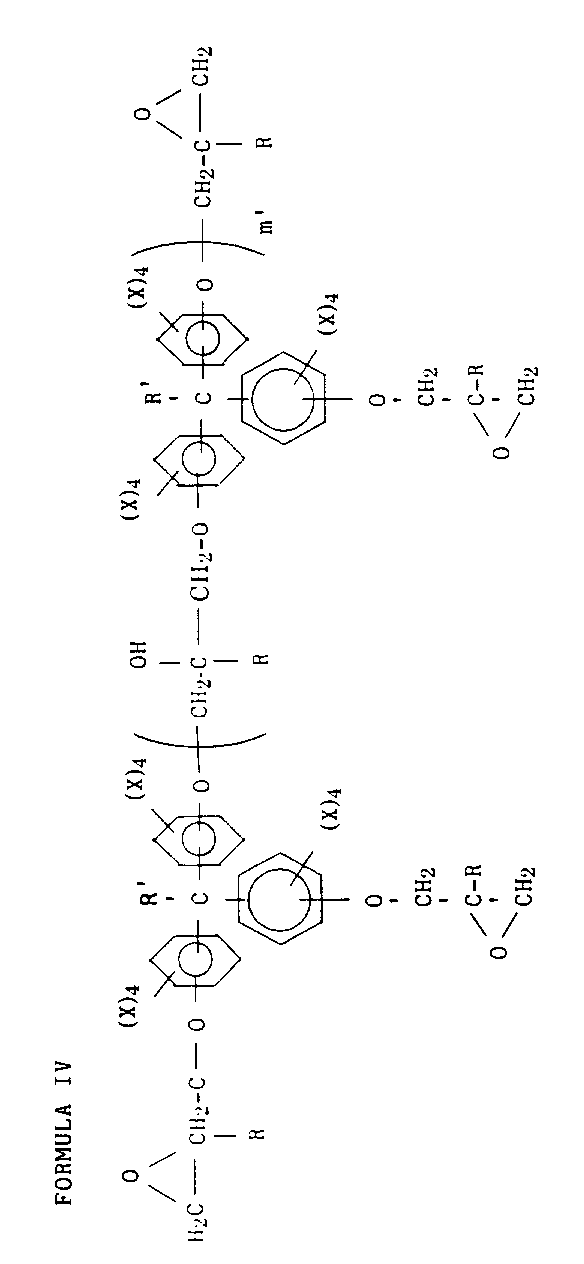 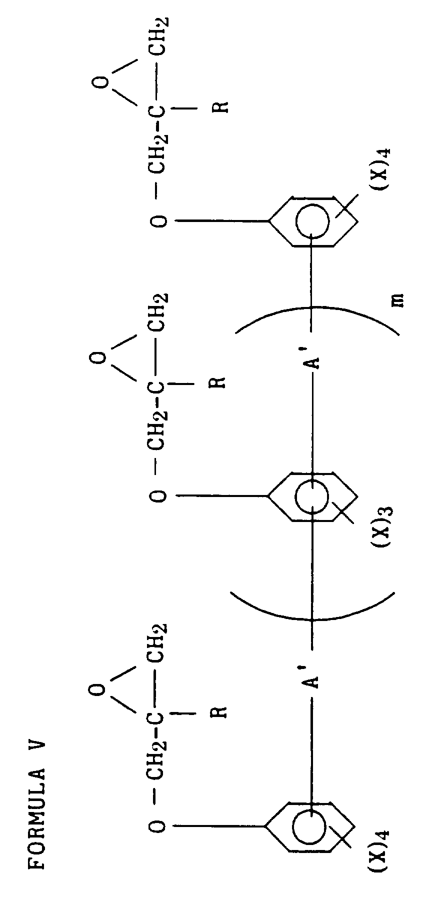 wherein each A' is independently a divalent hydrocarbyl group having suitably from 1 to 12, more suitably from 1 to 6, most suitably from 1 to 4, carbon atoms, -S-, -S-S-, -SO-, -SO2-, -CO- or -O-; each R is independently hydrogen or an alkyl group having from 1 to 4 carbon atoms; R' is hydrogen or a hydrocarbyl group having suitably from 1 to 12, more suitably from 1 to 6, most suitably from 1 to 4, carbon atoms; each X is independently hydrogen, a hydrocarbyl or hydrocarbyloxy group having suitably from 1 to 12, more suitably from 1 to 6, most suitably from 1 to 4, carbon atoms, or a halogen atom preferably chlorine or bromine; m has an average value suitably from 0.001 to 3, more suitably from 0.1 to 2, most suitably from 1 to 2; m' has an average value suitably from 0.001 to 3, more suitably from 0.1 to 2, most suitably from 1 to 2; n has a value of zero or 1; n' has an average value suitably from zero to 0.5, more suitably from 0.01 to 0.2, most suitably from 0.01 to 0.1; 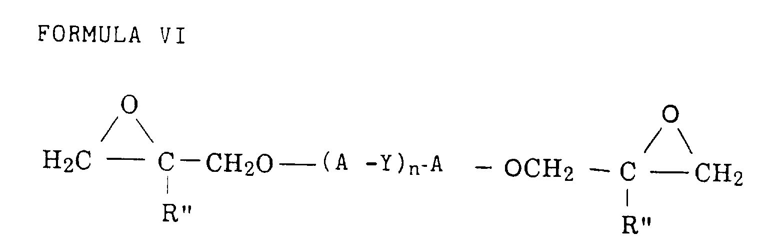 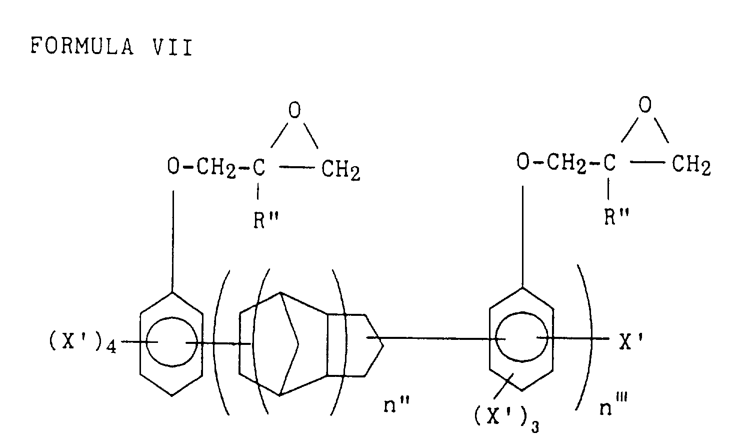 wherein each A is independently a divalent hydrocarbyl group having suitably from 2 to 6, more suitably from 2 to 5, most suitably from 2 to 4, carbon atoms; each R" is independently hydrogen or an alkyl group having from 1 to 4 carbon atoms, preferably hydrogen or methyl, most preferably hydrogen; each X' is independently hydrogen, an aliphatic hydrocarbon group containing from 1 to 6 carbon atoms, or a halogen, preferebly chlorine or bromine; each Y independently is -S- or -S-S-; n suitably has a value from 1 to 11, more suitably from 1 to 7, most suitably from 1 to 5; n" suitably has a value from zero to 4, more suitably from 1 to 3, most suitably from 1 to 2; and n''' has a value suitably from 1 to 4, more suitably from 1 to 3, most suitably from 1 to 2.

The term hydrocarbyl as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term hydrocarbyloxy means a hydrocarbyl group having an oxygen linkage between it and the object to which it is attached.

Particularly suitable epoxy resins include, for example, the diglycidyl ethers of dihydric phenols, such as, for example, the diglycidyl ethers of bisphenol A, bisphenol F, bisphenol K, dihydroxy biphenyl (biphenol), and the diglycidyl ethers represented by Formula VI.

The epoxy resins are suitably prepared by means known for the preparation of epoxy resins from a compound containing hydroxyl groups by reacting such compound with an epihalohydrin in the presence of a suitable catalyst and reacting the resultant intermediate halohydrin ether with a basic acting substance such as an alkali metal hydroxide.

When the hydroxyl group is an aliphatic hydroxyl group, the catalyst is suitably a Lewis acid such as, for example, stannic chloride, boron trifluoride, combinations thereof and the like. When the hydroxyl group is an aromatic hydroxyl group, the catalyst is suitably a tertiary amine, an ammonium compound, a phosphonium compound a phosphine or the like. Particularly suitable such catalysts include, for example, benzyl trimethyl ammonium chloride, sodium hydroxide, potassium hydroxide, and combinations thereof.

The epoxy resins represented by Formula VII can be prepared by the methods disclosed in U.S. 4,390,680.

The epoxy resin adducts of the present invention can be cured with any suitable curing agent for epoxy resins including, for example, primary and secondary polyamines, carboxylic acids and anhydrides thereof, Lewis acids, phenolic hydroxyl-containing compounds, guanidines, biguanides, polyamides, and combinations thereof. Particularly suitable curing agents include, for example, ethylene diamine, diethylenetriamine, triethylenetetramine, adipic acid, phosphoric acid, dicyandiamide, diaminocyclohexane, and combinations thereof. The curing agents are employed in an amount which will effectively cure the composition containing the epoxy resin adduct. These amounts will depend upon the particular epoxy resin adduct and curing agent employed; however, suitable amounts include, for example, from 0.6 to 1, more suitably from 0.8 to 1, most suitably 1 equivalent of curing agent per epoxide equivalent for those curing agents which cure by reacting with the epoxy group of the epoxy resin. The Handbook of Epoxy Resins by Lee and Neville, McGraw-Hill, 1967, contains various discussions concerning the curing of epoxy resins as well as compilation of suitable curing agents.

If desired, the thermosettable compositions of the present invention can be blended with other materials such as solvents or diluents, fillers, pigments, dyes, flow modifiers, thickeners, reinforcing agents, fire retarding or suppressing agents, and combinations thereof.

These additives are added in functionally equivalent amounts, e.g., the pigments and/or dyes are added in quantities which will provide the composition with the desired color; however, they are suitably employed in amounts of from 5 to 50, more suitably from 5 to 40, most suitably from 10 to 40 percent by weight based upon the combined weight of the epoxy resin and curing agent.

Solvents or diluents which can be employed herein include, for example, hydrocarbons, ketones, glycol ethers, glycol ether acetates, and combinations thereof. Particularly suitable solvents or diluents include, for example, toluene, benzene, xylene, methyl ethyl ketone, methyl isobutyl ketone, diethylene glycol methyl ether, dipropylene glycol methyl ether, propylene glycol methyl ether, diethylene glycol methyl ether acetate, dipropylene glycol methyl ether acetate, propylene glycol methyl ether acetate, and combinations thereof.

The modifiers such as thickeners, flow modifiers and the like can be suitably employed in amounts of from 0.05 to 3, more suitably from 0.1 to 3, most suitably from 0.1 to 2 percent by weight based upon the combined weight of epoxy resin and curing agent.

Reinforcing materials which can be employed herein include natural and synthetic fibers in the form of woven, mat, monofilament, multifilament, chopped fibers and the like. Suitable reinforcing materials include, glass, ceramics, nylon, rayon, cotton, aramid, graphite, and combinations thereof.

Suitable fillers which can be employed herein include, for example, inorganic oxides, inorganic carbonates, ceramic microspheres, plastic microspheres, glass microsphers, clay, sand, gravel, and combinations thereof.

The fillers can be employed in amounts suitably from 5 to 50, more suitably from 5 to 40, most suitably from 10 to 40 percent by weight based upon the combined weight of epoxy resin and curing agent.

The epoxy resin adducts of the present invention can be formulated for use in such applications as, for example, flooring, casting, molding, adhesives, potting, filament winding, encapsulation, structural and electrical laminates, composites, coatings and the like.

The following examples are illustrative of the present invention.

The following components were employed in the examples.

EPOXY RESIN A is a diglycidyl ether of bisphenol A having an EEW of 182.6 and a viscosity of 7959 cks (0.007959 m/s) at 25°C.

EPOXY RESIN B is a diglycidyl ether of bisphenol A having an EEW of 181 and a viscosity of 7755 cks (0.007755 m/s) at 25°C.

EPOXY RESIN C is a diglycidyl ether of bisphenol A having an EEW of 180 and a viscosity of 7963 cks (0.007963 m/s) at 25°C.

EPOXY RESIN D is the diglycidyl ether of phenol-formaldehyde resin (bisphenol F) with an average epoxy functionality of 2 having an EEW of 160 and a viscosity of 947 cks (0.000947 m2/s) at 25°C.

EPOXY RESIN E is the glycidyl ether of phenol-formaldehyde novolac resin with an average epoxy functionality of 3.6 having an EEW of 178.5 and a viscosity of 2735 cps (2.735 Pa·s) at 70°C.

EPOXY RESIN F is a diglycidyl ether of a phenol-dicyclopentadiene resin having an average epoxide functionality of 2.2, an epoxide equivalent weight (EEW) of 233.7 and a viscosity of 1528 cps (1.528 Pa·s) at 85°C.

EPOXY RESIN G is the diglycidyl ether of dipropylene glycol having an EEW of 191.2 and a viscosity of 40.5 cks (0.0000405 m/s) at 25°C.

EPOXY RESIN H is the diglycidyl ether of polypropylene glycol having an EEW of 316.2 and a viscosity of 70.1 cks (0.0000701 m/s) at 25°C.

EPOXY RESIN I is the diglycidyl ether of thiodiglycol having an EEW of 117 and a viscosity of 26 cks (0.000026 m/s) at 25°C.

CATALYST A is a 70 weight percent solution of ethyl triphenol phosphonium acetate·acetic acid complex in methanol.

### COMPARATIVE EXPERIMENT A

To a reaction vessel equipped with a nitrogen purge, stirrer, temperature control and condenser was added 195.7 gms (1.0717 epoxy equiv.) of EPOXY RESIN A, 4.3 gms (0.0716 carboxyl equiv.) of glacial acetic acid. The contents were then heated to 95°C whereupon 0.4 gm (0.0007 mole) of CATALYST A was added. The temperature was increased to 110°C and maintained for 1.6 hours. The resultant compound had a percent epoxide of 21.1 and a viscosity of 13249 cks (0.013249 m/s) at 25°C.

### COMPARATIVE EXPERIMENT B

To a reaction vessel equipped with a nitrogen purge, stirrer, temperature control and condenser was added 484.45 gms (2.6765 epoxy equiv.) of EPOXY RESIN B, 15.55 gms (0.1771 carboxyl equiv.) of butyric acid. The contents were then heated to 90°C whereupon 0.88 gm (0.0015 mole) of CATALYST A was added. The temperature was increased to 140°C and maintained for 1.25 hours. The resultant compound had a percent epoxide of 21.79 and a viscosity of 8524 cks (0.008524 m/s) at 25°C.

### COMPARATIVE EXPERIMENT C

To a reaction vessel equipped with a nitrogen purge, stirrer, temperature control and condenser was added 481.45 gms (2.6599 epoxy equiv.) of EPOXY RESIN B, 18.6 gms (0.1567 carboxyl equiv.) of hexanoic acid. The contents were then heated to 90°C whereupon 0.87 gm (0.0015 mole) of CATALYST A was added. The temperature was increased to 180°C and maintained for 1 hour. The resultant compound had a percent epoxide of 21.65 and a viscosity of 7899 cks (0.007899 m/s) at 25°C.

### COMPARATIVE EXPERIMENT D

To a reaction vessel equipped with a nitrogen purge, stirrer, temperature control and condenser was added 472.15 gms (2.6086 epoxy equiv.) of EPOXY RESIN B, 27.8 gms (0.1084 carboxyl equiv.) of palmitic acid (hexadecanoic acid). The contents were then heated to 90°C whereupon 0.86 gm (0.0015 mole) of CATALYST A was added. The temperature was increased to 180°C and maintained for 1 hour. The resultant compound had a percent epoxide of 21.47 and a viscosity of 11840 cks (0.011840 m/s) at 25°C.

### COMPARATIVE EXPERIMENT E

To a reaction vessel equipped with a nitrogen purge, stirrer, temperature control and condenser was added 462 gms (2.5525 epoxy equiv.) of EPOXY RESIN B, 38 gms (0.1336 carboxyl equiv.) of stearic acid (octadecanoic acid). The contents were then heated to 100°C whereupon 0.4 gm (0.0007 mole) of CATALYST A was added. The temperature was increased to 180°C and maintained for 1 hour. The resultant compound had a percent epoxide of 21.5 and was a solid at 25°C.

### COMPARATIVE EXPERIMENT F

To a reaction vessel equipped with a nitrogen purge, stirrer, temperature control and condenser was added 100 gms (0.625 epoxy equiv.) of EPOXY RESIN D, 1.78 gms (0.0297 carboxyl equiv.) of glacial acetic acid. The contents were then heated to 90°C whereupon 0.15 gm (0.0003 mole) of CATALYST A was added. The temperature was increased to 110°C and maintained for 2 hours. The resultant compound had a percent epoxide of 25.1 and a viscosity of 1256 cks (0.001256 m/s) at 25°C.

### COMPARATIVE EXPERIMENT G

To a reaction vessel equipped with a nitrogen purge, stirrer, temperature control and condenser was added 100 gms (0.625 epoxy equiv.) of EPOXY RESIN D, 3.4 gms (0.0292 carboxyl equiv.) of hexanoic acid. The contents were then heated to 90°C whereupon 0.15 gm (0.0003 mole) of CATALYST A was added. The temperature was increased to 170°C and maintained for 1 hour. The resultant compound had a percent epoxide of 24.8 and a viscosity of 962 cks (0.000962 m/s) at 25°C.

### EXAMPLE 1

To a reaction vessel equipped with a nitrogen purge, stirrer, temperature control and condenser was added 215.6 gms (1.1978 epoxy equiv.) of EPOXY RESIN C, 12.9 gms (0.0723 carboxyl equiv.) of heptanoic acid. The contents were then heated to 90°C whereupon 0.3 gm (0.0005 mole) of CATALYST A was added. The temperature was increased to 160°C and maintained for 1 hour. The resultant compound had a percent epoxide of 21.5 and a viscosity of 7836 cks (0.007836 m/s) at 25°C.

### EXAMPLE 2

To a reaction vessel equipped with a nitrogen purge, stirrer, temperature control and condenser was added 478.95 gms (2.6461 epoxy equiv.) of EPOXY RESIN B, 21 gms (0.1456 carboxyl equiv.) of octanoic acid. The contents were then heated to 90°C whereupon 0.86 gm (0.0015 mole) of CATALYST A was added. The temperature was increased to 180°C and maintained for 0.9 hour. The resultant compound had a percent epoxide of 21.49 and a viscosity of 7287 cks (0.007287 m/s) at 25°C.

### EXAMPLE 3

To a reaction vessel equipped with a nitrogen purge, stirrer, temperature control and condenser was added 960 gms (5.2574 epoxy equiv.) of EPOXY RESIN A, 40 gms (0.253 carboxyl equiv.) of pelargonic acid. The contents were then heated to 90°C whereupon 0.8 gm (0.0014 mole) of CATALYST A was added. The temperature was increased to 180°C and maintained for 2 hours. The resultant compound had a percent epoxide of 21.2 and a viscosity of 7051 cks (0.007051 m/s) at 25°C.

### EXAMPLE 4

To a reaction vessel equipped with a nitrogen purge, stirrer, temperature control and condenser was added 476.85 gms (2.6345 epoxy equiv.) of EPOXY RESIN B, 23.2 gms (0.1346 carboxyl equiv.) of decanoic acid. The contents were then heated to 90°C whereupon 0.86 gm (0.0015 mole) of CATALYST A was added. The temperature was increased to 180°C and maintained for 1 hour. The resultant compound had a percent epoxide of 21.63 and a viscosity of 7082 cks (0.007082 m/s) at 25°C.

### EXAMPLE 5

To a reaction vessel equipped with a nitrogen purge, stirrer, temperature control and condenser was added 3253.6 gms (17.9757 epoxy equiv.) of EPOXY RESIN B, 171 gms (0.8537 carboxyl equiv.) of lauric acid. The contents were then heated to 90°C whereupon 3 gms (0.0051 mole) of CATALYST A was added. The temperature was increased to 160°C and maintained for 0.9 hour. The resultant compound had a percent epoxide of 21.5 and a viscosity of 6808 cks (0.006808 m/s) at 25°C.

### EXAMPLE 6

To a reaction vessel equipped with a nitrogen purge, stirrer, temperature control and condenser was added 473.5 gms (2.6105 epoxy equiv.) of EPOXY RESIN B, 26.5 gms (0.116 carboxyl equiv.) of myristic acid. The contents were then heated to 90°C whereupon 0.86 gm (0.0015 mole) of CATALYST A was added. The temperature was increased to 180°C and maintained for 1 hour. The resultant compound had a percent epoxide of 21.44 and a viscosity of 6143 cks (0.006143 m/s) at 25°C.

### EXAMPLE 7

To a reaction vessel equipped with a nitrogen purge, stirrer, temperature control and condenser was added 212.1 gms (1.1783 epoxy equiv.) of EPOXY RESIN C, 12.9 gms (0.0533 carboxyl equiv.) of pentadecanoic acid. The contents were then heated to 90°C whereupon 0.3 gm (0.0005 mole) of CATALYST A was added. The temperature was increased to 160°C and maintained for 1 hour. The resultant compound had a percent epoxide of 21.4 and a viscosity of 6270 cks (0.006270 m/s) at 25°C.

### EXAMPLE 8

To a reaction vessel equipped with a nitrogen purge, stirrer, temperature control and condenser was added 100 gms (0.625 epoxy equiv.) of EPOXY RESIN D, 5.9 gms (0.0295 carboxyl equiv.) of lauric acid. The contents were then heated to 90°C whereupon 0.15 gm (0.0003 mole) of CATALYST A was added. The temperature was increased to 170°C and maintained for 1 hour. The resultant compound had a percent epoxide of 24.1 and a viscosity of 903 cks (0.000903 m/s) at 25°C.

### EXAMPLE 9

To a reaction vessel equipped with a nitrogen purge, stirrer, temperature control and condenser was added 100 gms (0.625 epoxy equiv.) of EPOXY RESIN D, 6.7 gms (0.0294 carboxyl equiv.) of myristic acid. The contents were then heated to 90°C whereupon 0.15 gm (0.0003 mole) of CATALYST A was added. The temperature was increased to 170°C and maintained for 1 hour. The resultant compound had a percent epoxide of 24 and a viscosity of 901 cks (0.000901 m/s) at 25°C.

### EXAMPLE 10

To a reaction vessel equipped with a nitrogen purge, stirrer, temperature control and condenser was added 212.2 gms (1.1888 epoxy equiv.) of EPOXY RESIN E, 12.8 gms (0.064 carboxyl equiv.) of lauric acid. The contents were then heated to 90°C whereupon 0.3 gm (0.0005 mole) of CATALYST A was added. The temperature was increased to 160°C and maintained for 1 hour. The resultant compound had a percent epoxide of 21.5 and a viscosity of 1908 cp (1.908 Pa·s) at 70°C.

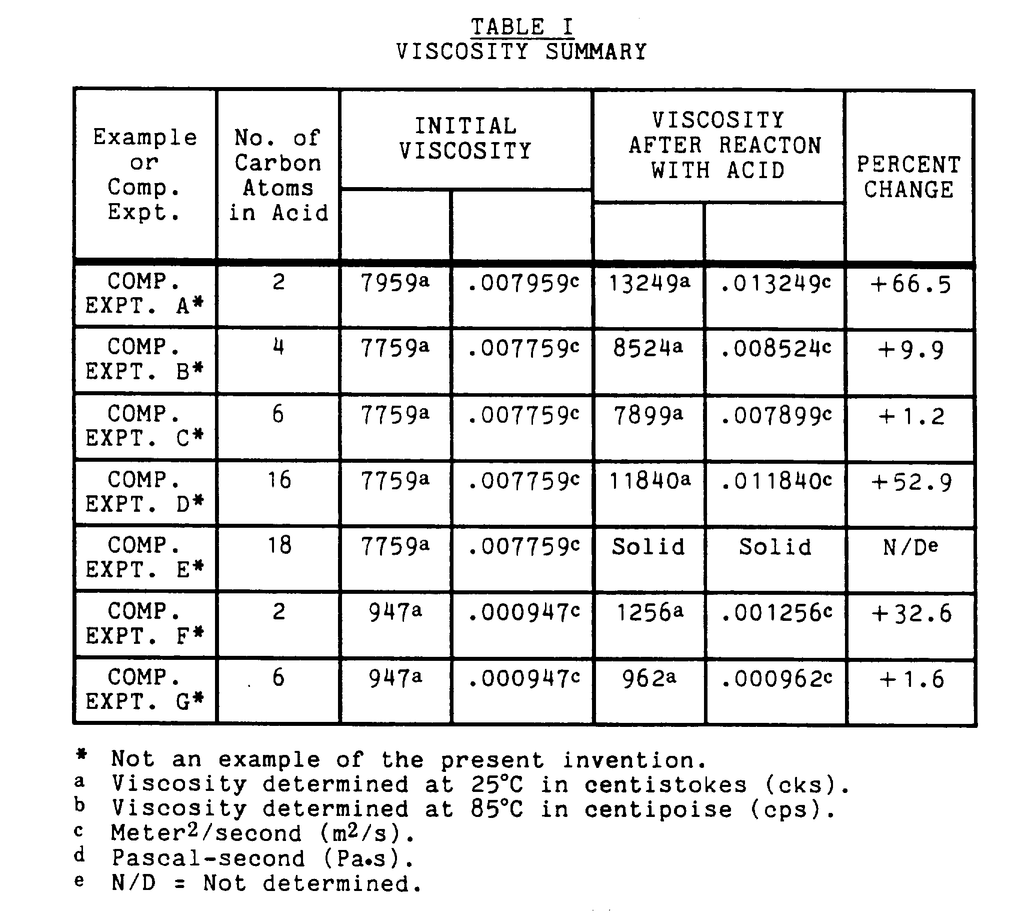

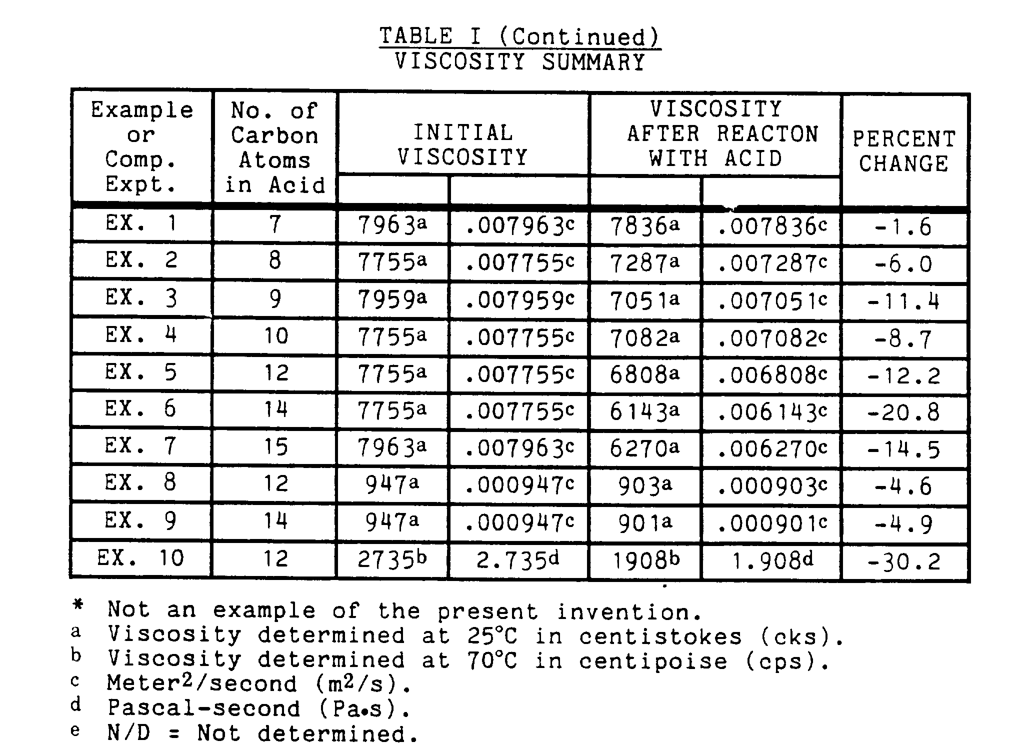

### EXAMPLE 11

Panels coated with compounds of the present invention were prepared in the following manner. The panels were coated using a number 50 draw down bar. After coating the unpolished and untreated cold rolled steel 24 gauge (0.63 mm) x 12 in. x 4 in. (304.8 mm x 101.6 mm) panel, it was placed into an oven at a temperature of 125°C for cure. After curing, the coating was tested in the following manner. The coating was cut in such a manner that 100 small blocks were made. This was accomplished by cutting horizontal lines and vertical lines measuring 1.5 x 1.5 cm total size. The amount of coated blocks remaining was recorded. The higher the amount of coating remaining the better the coating. The results are given in the Table II.

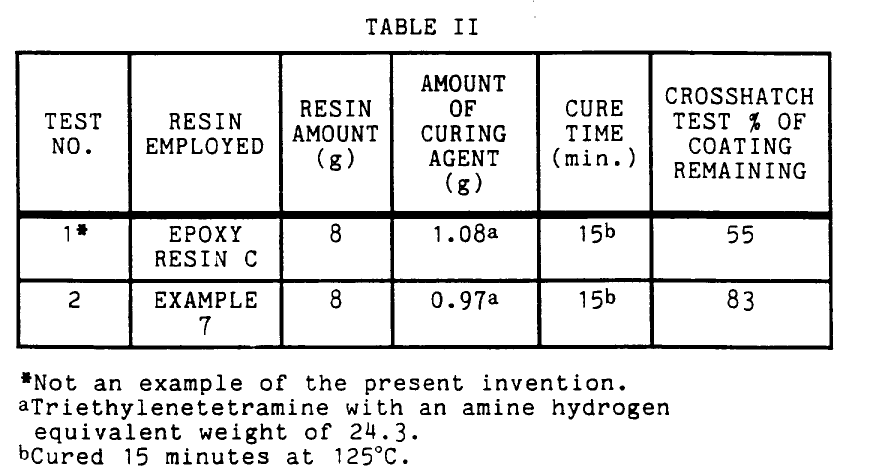

### COMPARATIVE EXPERIMENT H

To a reaction vessel equipped with a nitrogen purge, stirrer, temperature control and condenser was added 214 gms (1.1192 epoxy equiv.) of EPOXY RESIN G, 11 gms (0.0482 carboxyl equiv.) of myristic acid. The contents were then heated to 90°C whereupon 0.3 gm (0.0005 mole) of CATALYST A was added. The temperature was increased to 160°C and maintained for 1 hour. The resultant compound had a percent epoxide of 20.2 and a viscosity of 48,1 cks (0.0000481 cm/s) at 25°C.

### COMPARATIVE EXPERIMENT I

To a reaction vessel equipped with a nitrogen purge, stirrer, temperature control and condenser was added 215.7 gms (0.6822 epoxy equiv.) of EPOXY RESIN H, 9.3 gms (0.0408 carboxyl equiv.) of myristic acid. The contents were then heated to 90°C whereupon 0.3 gm (0.0005 mole) of CATALYST A was added. The temperature was increased to 160°C and maintained for 1 hour. The resultant compound had a percent epoxide of 12.2 and a viscosity of 77.6 cks (0.0000776 cm/s) at 25°C.

### EXAMPLE 12

To a reaction vessel equipped with a nitrogen purge, stirrer, temperature control and condenser was added 970 gms (4.1507 epoxy equiv.) of EPOXY RESIN F, 30 gms (0.1498 carboxyl equiv.) of lauric acid. The contents were then heated to 90°C whereupon 1 gm (0.0017 mole) of CATALYST A was added. The temperature was increased to 160°C and maintained for 1.17 hour. The resultant compound had a percent epoxide of 17.1 and a viscosity of 1318 cps (1.318 Pa·s) at 85°C.

### EXAMPLE 13

To a reaction vessel equipped with a nitrogen purge, stirrer, temperature control and condenser was added 953 gms (4.0779 epoxy equiv.) of EPOXY RESIN A, 47 gms (0.2346 carboxyl equiv.) of lauric acid. The contents were then heated to 90°C whereupon 1 gm (0.0017 mole) of CATALYST A was added. The temperature was increased to 160°C and maintained for 1.17 hour. The resultant compound had a percent epoxide of 16.7 and a viscosity of 1163 cps (1.163 Pa·s) at 85°C.

### EXAMPLE 14

To a reaction vessel equipped with a nitrogen purge, stirrer, temperature control and condenser was added 930 gms (3.9795 epoxy equiv.) of EPOXY RESIN F, 69 gms (0.3445 carboxyl equiv.) of lauric acid. The contents were then heated to 90°C whereupon 1 gm (0.0017 mole) of CATALYST A was added. The temperature was increased to 160°C and maintained for 1.17 hour. The resultant compound had a percent epoxide of 15.6 and a viscosity of 1045 cps (1.045 Pa·s) at 85°C.

### EXAMPLE 15

To a reaction vessel equipped with a nitrogen purge, stirrer, temperature control and condenser was added 899 gms (3.8468 epoxy equiv.) of EPOXY RESIN F, 102 gms (0.5092 carboxyl equiv.) of lauric acid. The contents were then heated to 90°C whereupon 1 gm (0.0017 mole) of CATALYST A was added. The temperature was increased to 160°C and maintained for 1.17 hour. The resultant compound had a percent epoxide of 14.3 and a viscosity of 805 cps (0.805 Pa·s) at 85°C.

### EXAMPLE 16

To a reaction vessel equipped with a nitrogen purge, stirrer, temperature control and condenser was added 218.5 gms (0.9349 epoxy equiv.) of EPOXY RESIN F, 6.5 gms (0.056 carboxyl equiv.) of hexanoic acid. The contents were then heated to 90°C whereupon 0.3 gm (0.0005 mole) of CATALYST A was added. The temperature was increased to 160°C and maintained for 1 hour. The resultant compound had a percent epoxide of 16.9 and a viscosity of 1420 cps (1.420 Pa·s) at 85°C.

### EXAMPLE 17

To a reaction vessel equipped with a nitrogen purge, stirrer, temperature control and condenser was added 218 gms (0.9328 epoxy equiv.) of EPOXY RESIN F, 7 gms (0.0538 carboxyl equiv.) of heptanoic acid. The contents were then heated to 90°C whereupon 0.3 gm (0.0005 mole) of CATALYST A was added. The temperature was increased to 160°C and maintained for 1 hour. The resultant compound had a percent epoxide of 17.1 and a viscosity of 1345 cps (1.345 Pa·s) at 85°C.

### EXAMPLE 18

To a reaction vessel equipped with a nitrogen purge, stirrer, temperature control and condenser was added 217.5 gms (0.9307 epoxy equiv.) of EPOXY RESIN F, 7.5 gms (0.0521 carboxyl equiv.) of octanoic acid. The contents were then heated to 90°C whereupon 0.3 gm (0.0005 mole) of CATALYST A was added. The temperature was increased to 160°C and maintained for 1.25 hours. The resultant compound had a percent epoxide of 17 and a viscosity of 1365 cps (1.365 Pa·s) at 85°C.

### EXAMPLE 19

To a reaction vessel equipped with a nitrogen purge, stirrer, temperature control and condenser was added 216.7 gms (0.9273 epoxy equiv.) of EPOXY RESIN F, 8.3 gms (0.0483 carboxyl equiv.) of decanoic acid. The contents were then heated to 90°C whereupon 0.3 gm (0.0005 mole) of CATALYST A was added. The temperature was increased to 160°C and maintained for 1.2 hours. The resultant compound had a percent epoxide of 16.9 and a viscosity of 1275 cps (1.275 Pa·s) at 85°C.

### EXAMPLE 20

To a reaction vessel equipped with a nitrogen purge, stirrer, temperature control and condenser was added 215.3 gms (0.9213 epoxy equiv.) of EPOXY RESIN F, 9.8 gms (0.0429 carboxyl equiv.) of myristic acid. The contents were then heated to 90°C whereupon 0.3 gm (0.0005 mole) of CATALYST A was added. The temperature was increased to 160°C and maintained for 1 hour. The resultant compound had a percent epoxide of 16.8 and a viscosity of 1143 cps (1.143 Pa·s) at 85°C.

### EXAMPLE 21

To a reaction vessel equipped with a nitrogen purge, stirrer, temperature control and condenser was added 214.3 gms (0.9169 epoxy equiv.) of EPOXY RESIN F, 10.7 gms (0.0377 carboxyl equiv.) of stearic acid. The contents were then heated to 90°C whereupon 0.3 gm (0.0005 mole) of CATALYST A was added. The temperature was increased to 160°C and maintained for 1 hour. The resultant compound had a percent epoxide of 16.6 and a viscosity of 1093 cps (1.093 Pa·s) at 85°C.

### EXAMPLE 22

To a reaction vessel equipped with a nitrogen purge, stirrer, temperature control and condenser was added 116.1 gms (0.9923 epoxy equiv.) of EPOXY RESIN I, 22.5 gms (0.1125 carboxyl equiv.) of lauric acid. The contents were then heated to 90°C whereupon 0.3 gm (0.0005 mole) of CATALYST A was added. The temperature was increased to 170°C and maintained for 1 hour. The resultant compound had a percent epoxide of 19.8 and a viscosity of 17 cks (0.000017 cm/s) at 25°C.

Table III provides a summary of the viscosity of the epoxy resins before and after reaction with the monocarboxylic acid.

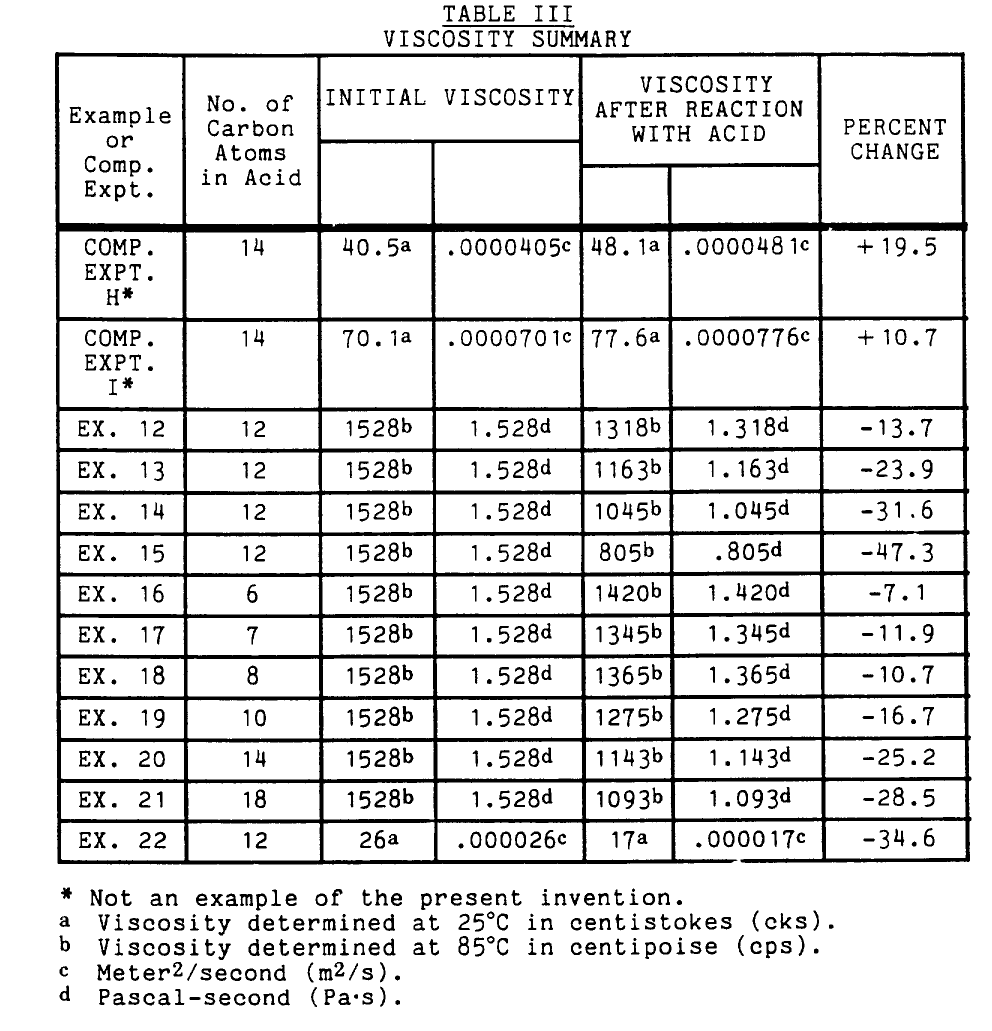

### EXAMPLE 23

Panels coated with compounds of the present invention were prepared by dissolving the resin in propylene glycol methyl ether acetate to 80% solids, and then adding the curing agent. The panels were coated using a number 50 draw down bar. After coating the unpolished and untreated cold rolled steel 24 gauge (0.63 mm) x 12 in. x 4 in. (304.8 mm x 101.6 mm) panel, it is placed into an oven at a temperature of 125°C for cure. After curing, the coating was tested in the following manner. The coating was cut in such a manner that 100 small blocks were made. This was accomplished by cutting horizontal lines and vertical lines measuring 1.5 x 1.5 cm total size. The amount of coated blocks remaining was recorded. The higher the amount of coating remaining the better the coating. The results are given in Table IV.

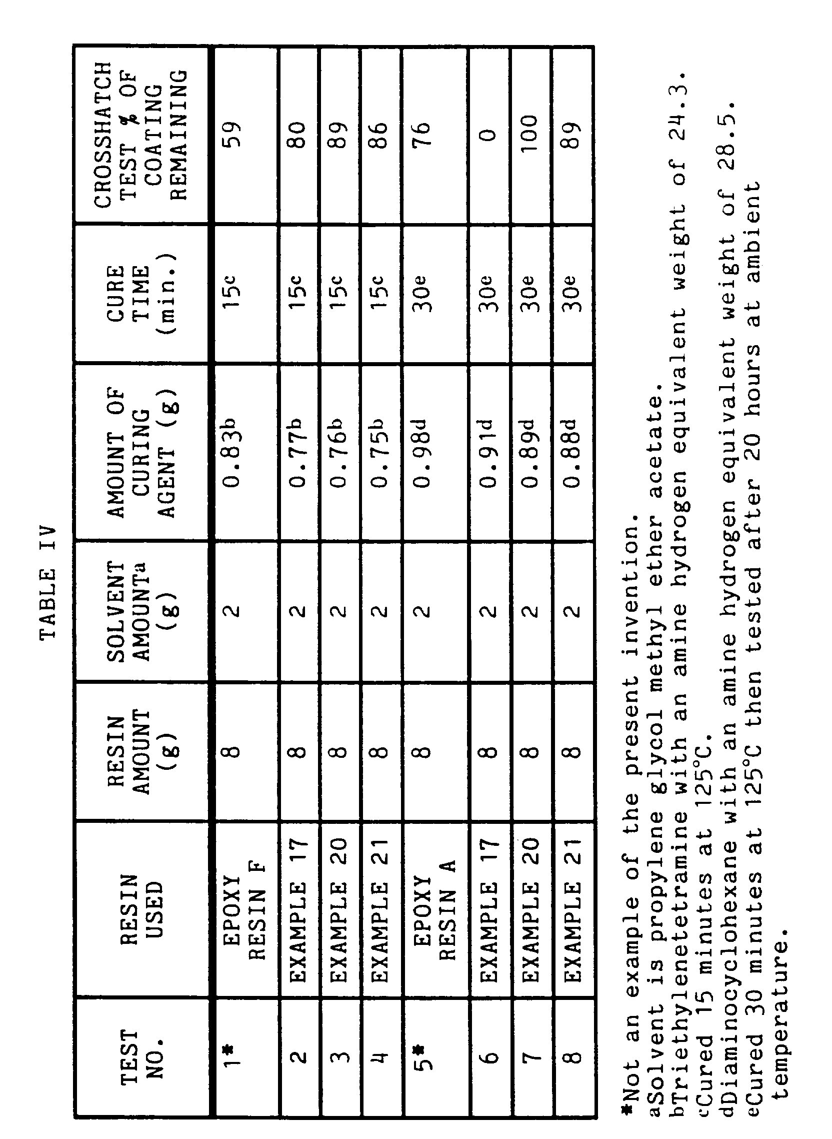

## Claims

1. An adduct of (A) at least one polyglycidyl ether of a compound selected from the group consisting of (1) a compound containing an average of more than one phenolic hydroxyl group per molecule, and (2) a compound represented by the formula HO-(-A-Y-)ₙ -A-OH; wherein each A is independently a divalent hydrocarbyl group having from 2 to 6 carbon atoms, each is Y independently -S- or -S-S-, and n has a value from 1 to 11; and (B) at least one aliphatic monocarboxylic acid; with the provisos that (i) the ratio of carboxylic acid groups per epoxide group is from 0.01:1 to 0.2:1, (ii) said aliphatic monocarboxylic acid contains from 7 to 15 carbon atoms in the event that a polyglycidyl ether of a compound (1) is employed, an (iii) said aliphatic monocarboxylic acid contains from 6 to 18 carbon atoms in the event that a polyglycidyl ether of a compound (2) is employed.

2. An adduct as claimed in Claim 1, wherein component (A) is an epoxy resin represented by one of the following Formulas II, III, IV or V: 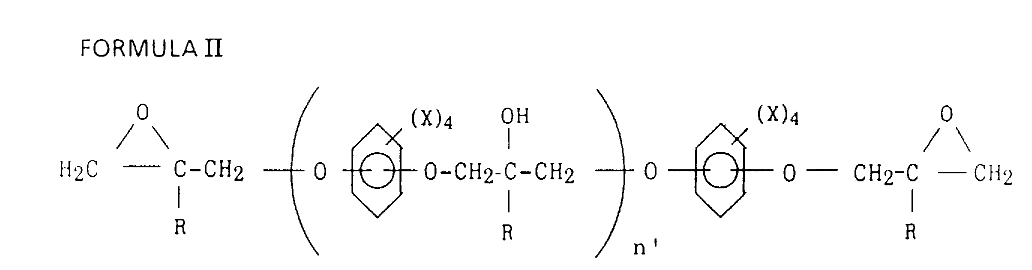 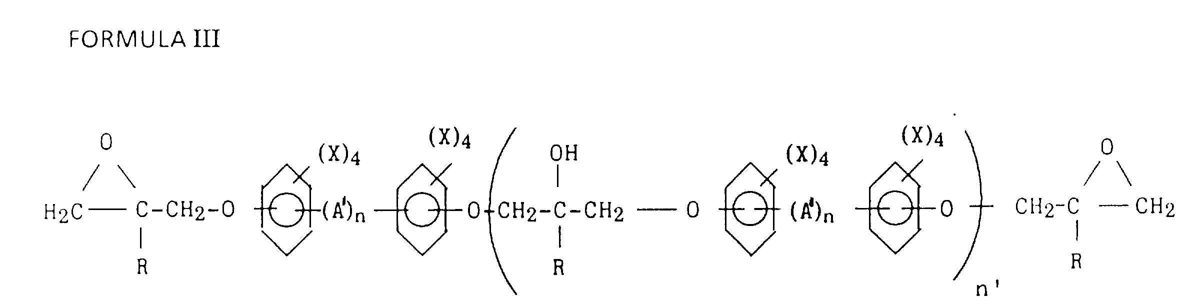 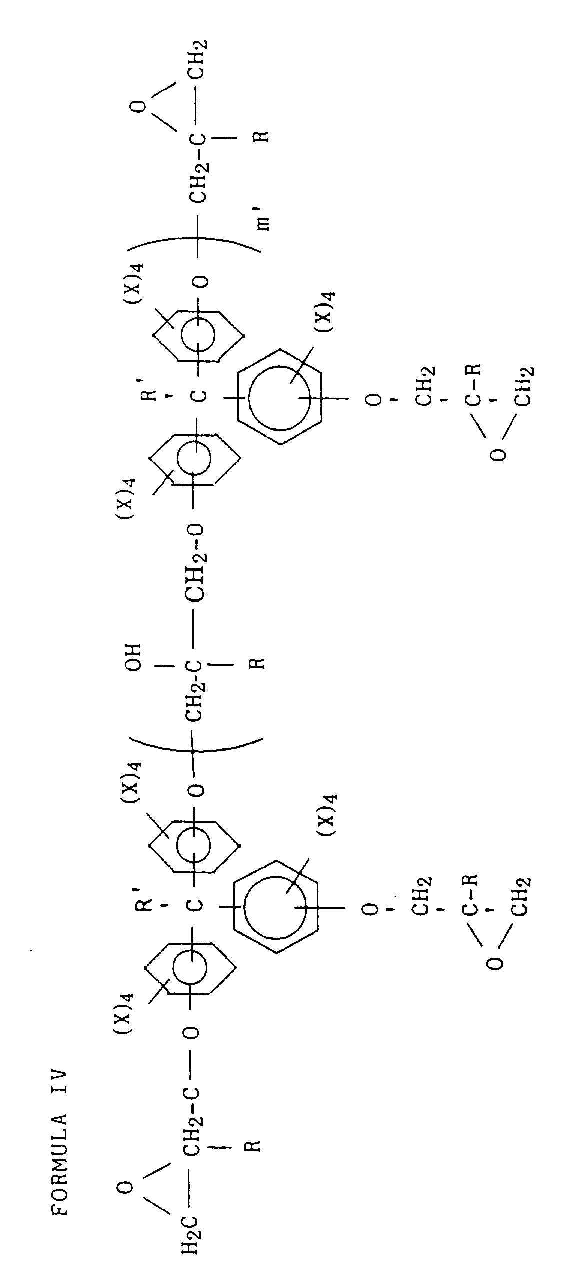 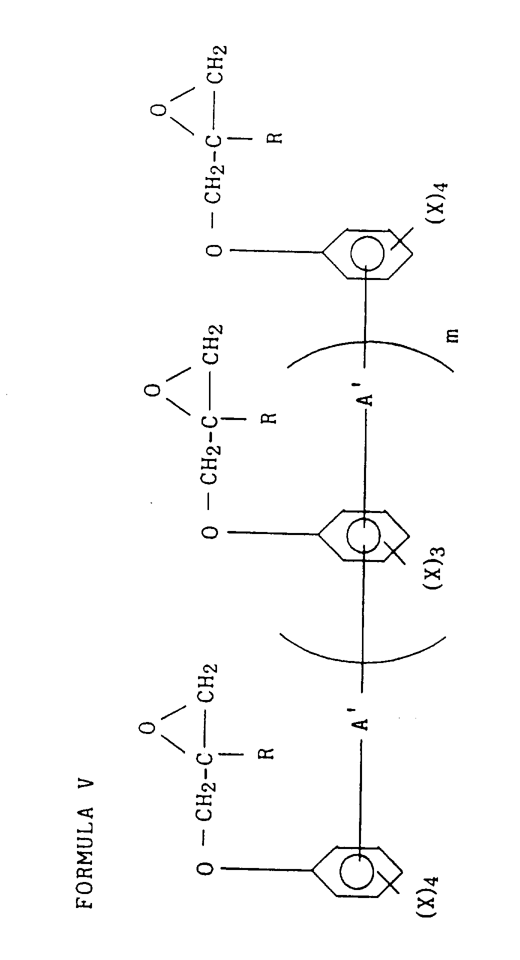 wherein each A' is independently a divalent hydrocarbyl group having from 1 to 12 carbon atoms, -S-, -S-S-, -SO-, -SO₂-, -CO- or -O-; each R is independently hydrogen or an alkyl group having from 1 to 4 carbon atoms; R' is hydrogen or a hydrocarbyl group having from 1 to 12 carbon atoms; each X is independently hydrogen, a hydrocarbyl or hydrocarbyloxy group having from 1 to 12 carbon atoms, or a halogen atom; m has an average value from 0.001 to 3; m' has an average value from 0.001 to 3; n has a value of zero or 1; n' has an average value from zero to 0.5.

3. An adduct as claimed in Claim 1, wherein component (A) is a polyglycidyl ether of a compound (1) which contains at least one cycloalkadiene or oligomer of cycloalkadiene moiety per molecule.

4. An adduct as claimed in Claim 1, wherein component (A) is a polyglycidyl ether of a compound (2) represented by the following Formula VI: 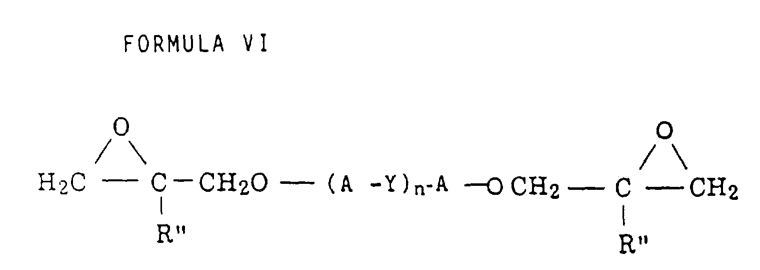 or is a polyglycidyl ether of a compound (1) as claimed in Claim 3 and represented by the following Formula VII: 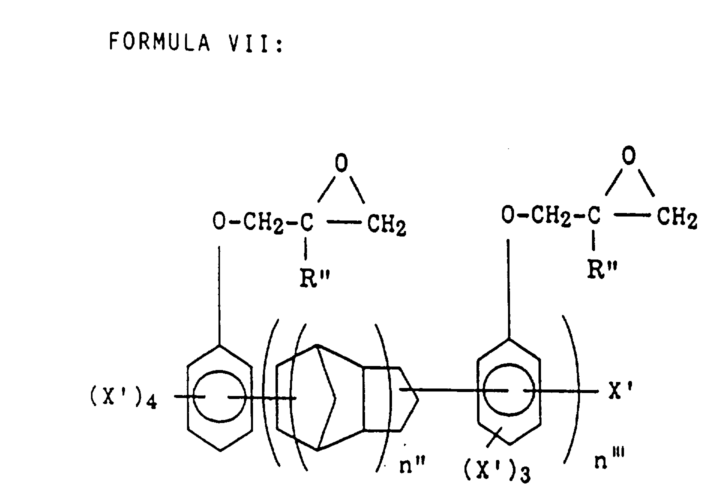 wherein each A is independently a divalent hydrocarbyl group having from 2 to 6 carbon atoms; each R" is independently hydrogen or an alkyl group having from 1 to 4 carbon atoms; each X' is independently hydrogen, an aliphatic hydrocarbon group containing from 1 to 6 carbon atoms, or a halogen; each Y independently is -S- or -S-S-; n has a value from 1 to 11; n" has a value from zero to 4; and n''' has a value from 1 to 4.

5. An adduct as claimed in any of Claims 1 to 4, wherein component (A) is a polyglycidyl ether of a compound (1) and component (B) is a compound represented by the following formula Ia 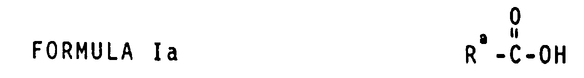 wherein R^{a} is a monovalent aliphatic hydrocarbon group having from 6 to 14 carbon atoms; and components (A) and (B) are employed in amounts which provide a ratio of carboxylic acid groups per epoxide group from 0.02:1 to 0.15:1.

6. An adduct of any of Claims 1, 3 or 4, wherein component (A) is a polyglycidyl ether of a compound (2) and component (B) is a compound represented by the following Formula Ib 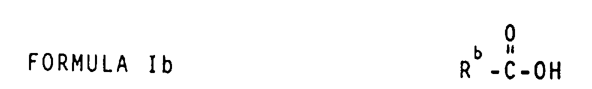 wherein R^{b} is a monovalent aliphatic hydrocarbon group having from 5 to 17 carbon atoms; and components (A) and (B) are employed in amounts which provide a ratio of carboxylic acid groups per epoxide group from 0.02:1 to 0.15:1.

7. An adduct as claimed in Claim 1, wherein
(a) component (A) is a diglycidyl ether of bisphenol A, a diglycidyl ether of bisphenol F, a diglycidylether of a phenoldicyclopentadiene hydrocarbon or a diglycidyl ether of thiodiglycol; and
(b) component (B) is lauric acid.

8. A thermosettable composition comprising (1) at least one adduct of any of Claims 1 to 7, and (2) a curing amount of at least one suitable curing agent for component (1).

9. The product resulting from curing a composition containing the thermosettable composition of Claim 8.

10. A process for preparing an epoxy resin having a low viscosity, which comprises reacting (A) at least one polyglycidyl ether of a compound selected from the group consisting of (1) a compound containing an average of more than one phenolic hydroxyl group per molecule, and (2) a compound represented by the formula HO-(-A-Y-) -A-OH; wherein each A is independently a divalent hydrocarbyl group having from 2 to 6 carbon atoms, each is Y independently -S-or -S-S-, and n has a value from 1 to 11; and (B) at least one aliphatic monocarboxylic acid; with the provisos that (i) the ratio of carboxylic acid groups per epoxide group is from 0.01:1 to 0.2:1, (ii) said aliphatic monocarboxylic acid contains from 7 to 15 carbon atoms in the event that a polygylycidyl ether of a compound (1) is employed, and (iii) said aliphatic monocarboxylic acid contains from 6 to 18 carbon atoms in the event that a polyglycidyl ether of a compound (2) is employed.

## Patentansprüche

1. Addukt aus (A) mindestens einem Polyglycidylether einer Verbindung, die ausgewählt ist aus der Gruppe, bestehend aus (1) einer Verbindung mit durchschnittlich mehr als einer phenolischen Hydroxylgruppe pro Molekül, und (2) einer Verbindung der Formel HO-(-A-Y)ₙ-A-OH; in der A jeweils unabhängig einen zweiwertigen Kohlenwasserstoffrest mit 2 bis 6 Kohlenstoffatomen bedeutet, Y jeweils unabhängig für -S-oder -S-S- steht und n einen Wert von 1 bis 11 hat; und (B) mindestens einer aliphatischen Monocarbonsäure; mit der Maßgabe, daß (i) das Verhältnis der Carboxylgruppen pro Epoxidgruppe von 0,01:1 bis 0,2:1 beträgt, (ii) die aliphatische Monocarbonsäure 7 bis 15 Kohlenstoffatome enthält, wenn ein Polyglycidylether einer Verbindung (1) verwendet wird, und (iii) die aliphatische Monocarbonsäure 6 bis 18 Kohlenstoffatome enthält, wenn ein Polyglycidylether einer Verbindung (2) verwendet wird.

2. Addukt nach Anspruch 1, wobei die Komponente (A) ein Epoxyharz ist, das einer der folgenden Formeln II, III, IV oder V entspricht: 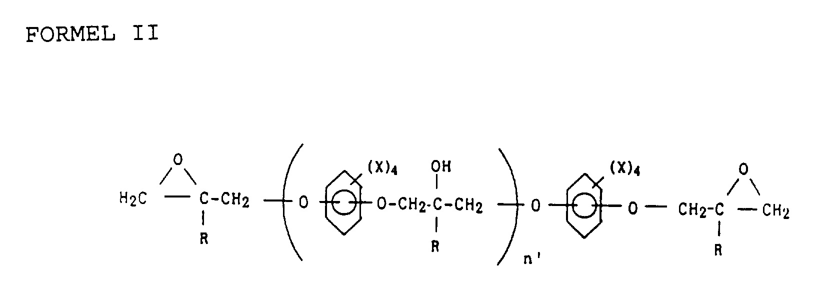 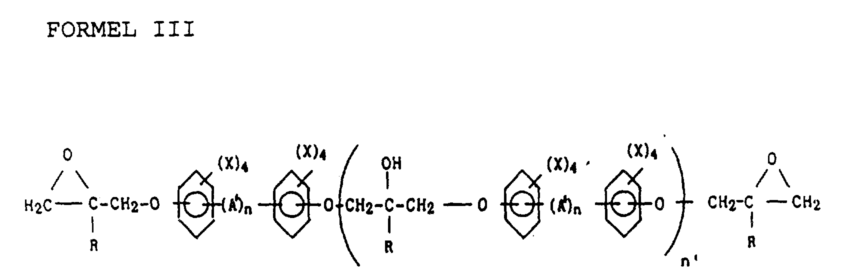 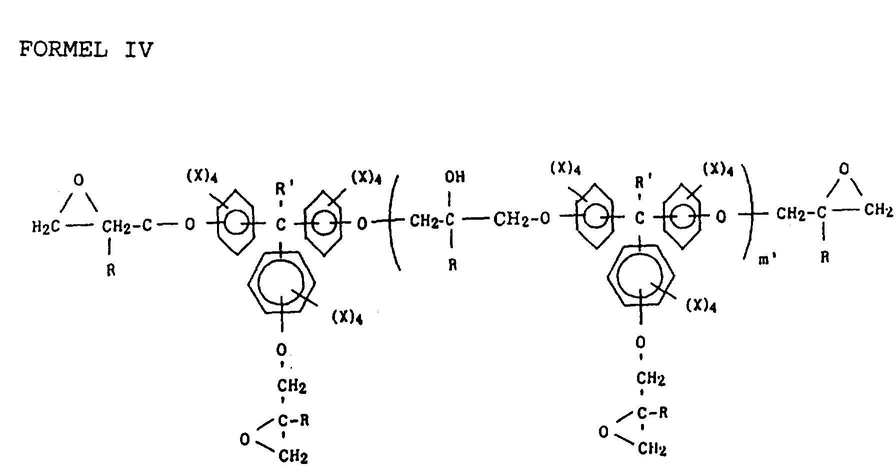 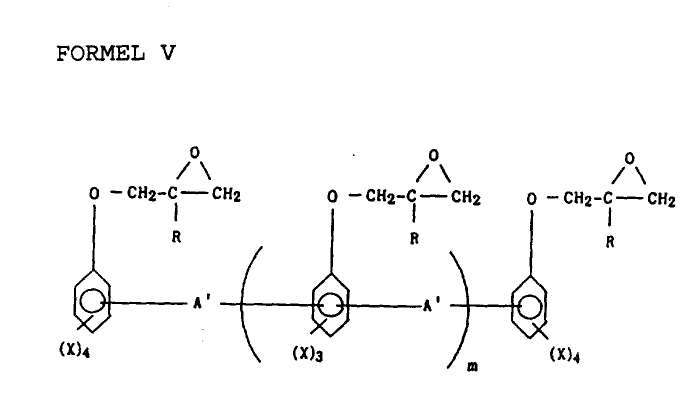 wobei A' jeweils unabhängig einen zweiwertigen Kohlenwasserstoffrest mit 1 bis 12 Kohlenstoffatomen, -S-, -S-S-, -SO-, -SO₂-, -CO- oder -O- bedeutet; R jeweils unabhängig Wasserstoff oder einen Alkylrest mit 1 bis 4 Kohlenstoffatomen bezeichnet; R' für Wasserstoff oder einen Kohlenwasserstoffrest mit 1 bis 12 Kohlenstoffatomen steht; X jeweils unabhängig Wasserstoff, einen Kohlenwasserstoffrest oder einen über Sauerstoff gebundenen Kohlenwasserstoffrest mit jeweils 1 bis 12 Kohlenstoffatomen oder ein Halogenatom bedeutet; m einen durchschnittlichen Wert von 0,001 bis 3 hat; m' einen durchschnittlichen Wert von 0,001 bis 3 hat; n einen Wert von 0 oder 1 hat; und n' einen durchschnittlichen Wert von 0 bis 0,5 hat.

3. Addukt nach Anspruch 1, wobei die Komponente (A) ein Polyglycidylether einer Verbindung (1) ist, die pro Molekül mindestens ein Cycloalkadien oder ein oligomeres Cycloalkadien als Baustein enthält.

4. Addukt nach Anspruch 1, wobei die Komponente (A) ein Polyglycidylether einer Verbindung (2) ist, der der Formel _{VI:} 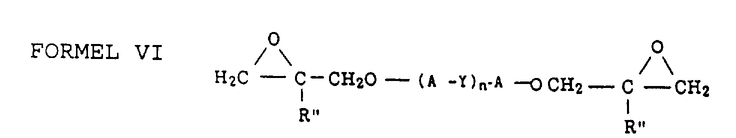 entspricht, oder ein Polyglycidylether einer Verbindung (1) nach Anspruch 3 ist, der der Formel VII: 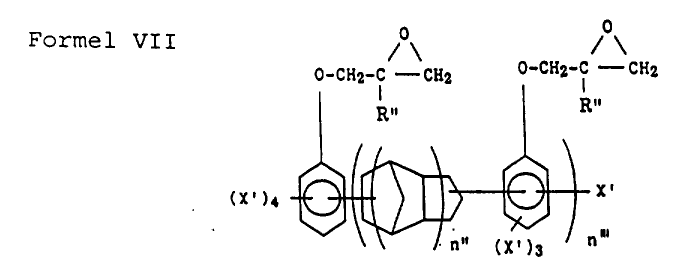 entspricht, wobei A jeweils unabhängig einen zweiwertigen Kohlenwasserstoffrest mit 2 bis 6 Kohlenstoffatomen bedeutet; R" jeweils unabhängig Wasserstoff oder einen Alkylrest mit 1 bis 4 Kohlenstoffatomen bezeichnet; X' jeweils unabhängig für Wasserstoff, einen aliphatischen Kohlenwasserstoffrest mit 1 bis 6 Kohlenstoffatomen oder ein Halogenatom steht; Y jeweils unabhängig -S- oder -S-S- bedeutet; n einen Wert von 1 bis 11 hat; n" einen Wert von 0 bis 4 hat; und n"' einen Wert von 1 bis 4 hat.

5. Addukt nach einem der Ansprüche 1 bis 4, wobei die Komponente (A) ein Polyglycidylether einer Verbindung (1) und die Komponente (B) eine Verbindung der folgenden Formel Ia: 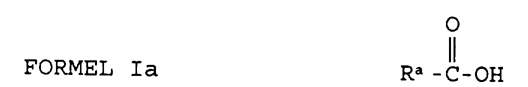 ist, in der R^{a} einen einwertigen aliphatischen Kohlenwasserstoffrest mit 6 bis 14 Kohlenstoffatomen bedeutet; und die Komponenten (A) und (B) in Mengen verwendet werden, die ein Verhältnis von Carboxylgruppen zu Epoxygruppen von 0,02:1 bis 0,15:1 ergeben.

6. Addukt nach einem der Ansprüche 1, 3 oder 4, wobei die Komponente (A) ein Polyglycidylether einer Verbindung (2) und die Komponente (B) eine Verbindung der folgenden Formel Ib; 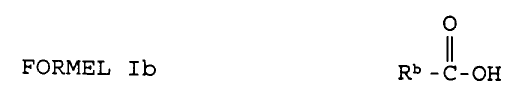 ist, in der R^{b} einen einwertigen aliphatischen Kohlenwasserstoffrest mit 5 bis 17 Kohlenstoffatomen bedeutet; und die Komponenten (A) und (B) in Mengen verwendet werden, die ein Verhältnis von Carboxylgruppen zu Epoxygruppen von 0,02:1 bis 0,15:1 ergeben.

7. Addukt nach Anspruch 1, wobei (a) die Komponente (A) ein Diglycidylether des Bispenols A, ein Diglycidylether des Bisphenols F, ein Diglycidylether eines Phenoldicyclopentadien-Kohlenwasserstoffs oder ein Diglycidylether des Thiodiglykols ist; und (b) die Komponente (B) Laurinsäure ist.

8. In der Wärme härtbare Stoffmischung, enthaltend (1) mindestens ein Addukt nach einem der Ansprüche 1 bis 7 und (2) eine für die Härtung ausreichende Menge eines geeigneten Härtungsmittels für die Komponente (1).

9. Produkt, das durch Härtung einer Stoffmischung entsteht, die die in der Wärme härtbare Stoffmischung nach Anspruch 8 enthält.

10. Verfahren zur Herstellung von Epoxyharzen mit niedriger Viskosität, bei dem man umsetzt (A) mindestens einen Polyglycidylether einer Verbindung, die ausgewählt ist aus der Gruppe, bestehend aus (1) einer Verbindung mit durchschnittlich mehr als einer phenolischen Hydroxylgruppe pro Molekül, und (2) einer Verbindung der Formel HO-(-A-Y-)ₙ-A-OH; in der A jeweils unabhängig einen zweiwertigen Kohlenwasserstoffrest mit 2 bis 6 Kohlenstoffatomen bedeutet, Y jeweils unabhängig für -S- oder -S-S- steht und n einen Wert von 1 bis 11 hat; mit (B) mindestens einer aliphatischen Monocarbonsäure; mit der Maßgabe, daß (i) das Verhältnis der Carboxylgruppen pro Epoxidgruppe von 0,01:1 bis 0,2:1 beträgt, (ii) die aliphatische Monocarbonsäure 7 bis 15 Kohlenstoffatome enthält, wenn ein Polyglycidylether einer Verbindung (1) verwendet wird, und (iii) die aliphatische Monocarbonsäure 6 bis 18 Kohlenstoffatome enthält, wenn ein Polyglycidylether einer Verbindung (2) verwendet wird.

## Revendications

1. Produit d'addition de (A) au moins un éther polyglycidylique d'un composé choisi dans le groupe constitué de (1) un composé contenant en moyenne plus d'un groupe hydroxyle phénolique par molécule, et (2) un composé représenté par la formule HO-(-A-Y-)ₙ -A-OH, dans laquelle chaque A représente indépendamment un groupe hydrocarbyle divalent ayant de 2 à 6 atomes de carbone, chaque Y représente indépendamment -S- ou -S-S-, et n a une valeur de 1 à 11; et de (B) au moins un acide monocarboxylique aliphatique, étant entendu que (i) le rapport des groupes acide carboxylique aux groupes époxyde est de 0,01:1 à 0,2:1, (ii) ledit acide monocarboxylique aliphatique contient de 7 à 15 atomes de carbone dans le cas où l'on utilise un éther polyglycidylique d'un composé (1), et (iii) ledit acide monocarboxylique aliphatique contient de 6 à 18 atomes de carbone dans le cas où l'on utilise un éther polyglycidylique d'un composé (2).

2. Produit d'addition selon la revendication 1, dans lequel le constituant (A) est une résine époxy représentée par l'une quelconque des formules suivantes II, III, IV et V : 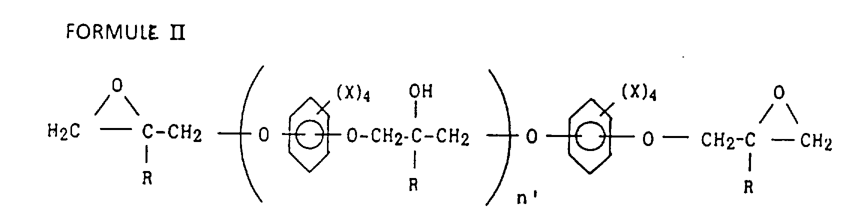 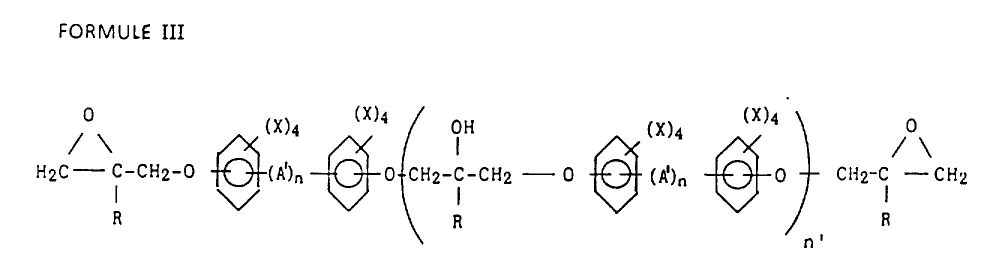 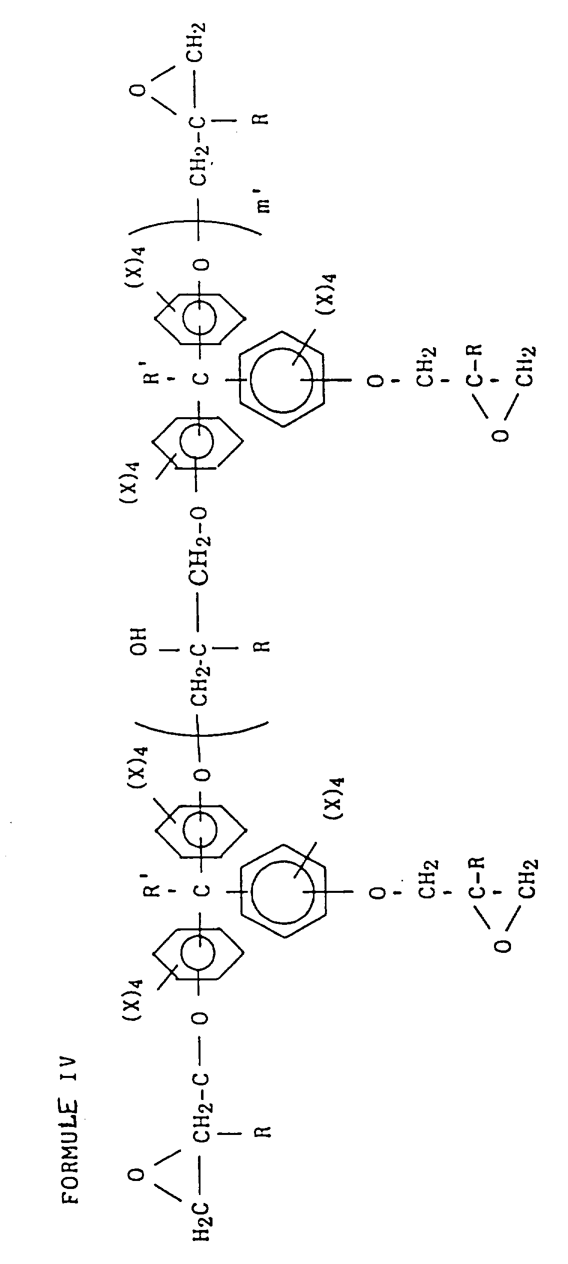 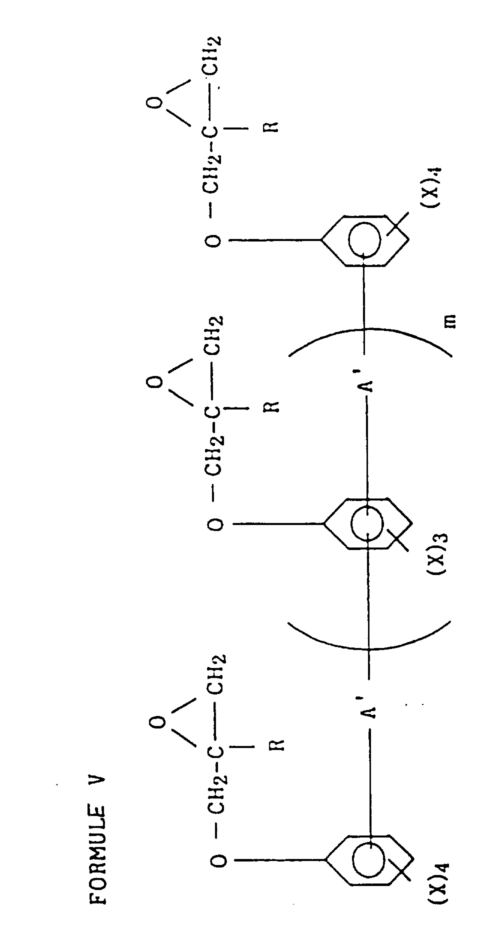 dans lesquelles chaque A' représente indépendamment un groupe hydrocarbyle divalent ayant de 1 à 12 atomes de carbone, -S-, -S-S-, -SO-, -SO₂-, -CO- ou -O-, chaque R représente indépendamment un atome d'hydrogène ou un groupe alkyle ayant de 1 à 4 atomes de carbone, chaque R' représente un atome d'hydrogène ou un groupe hydrocarbyle ayant de 1 à 12 atomes de carbone, chaque X représente indépendamment un atome d'hydrogène ou d'halogène, ou un groupe hydrocarbyle ou hydrocarbyloxy ayant de 1 à 12 atomes de carbone, m a une valeur moyenne de 0,001 à 3, m' a une valeur moyenne de 0,001 à 3, n a une valeur de 0 ou 1 et n' a une valeur moyenne de 0 à 0,5.

3. Produit d'addition selon la revendication 1, dans lequel le constituant (A) est un éther polyglycidylique d'un composé (1) qui contient au moins un fragment cycloalcadiène ou oligomère de cycloalcadiène par molécule.

4. Produit d'addition selon la revendication 1, dans lequel le constituant (A) est un éther polyglycidylique d'un composé (2), représenté par la formule VI suivante: 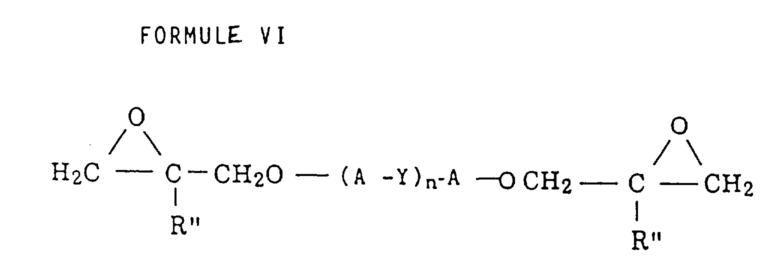 ou est un éther polyglycidylique d'un composé (1), tel que revendiqué dans la revendication 3 et représenté par la formule VII suivante: 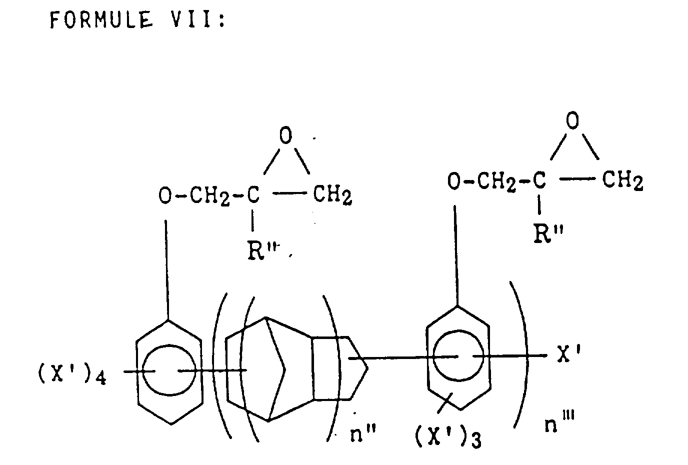 formules dans lesquelles chaque A représente indépendamment un groupe hydrocarbyle divalent ayant de 2 à 6 atomes de carbone, chaque R" représente indépendamment un atome d'hydrogène ou un groupe alkyle ayant de 1 à 4 atomes de carbone, chaque X' représente indépendamment un atome d'hydrogène ou d'halogène, ou un groupe hydrocarboné aliphatique contenant de 1 à 6 atomes de carbone, chaque Y représente indépendamment -S- ou -S-S-, n a une valeur de 1 à 11, n" a une valeur de 0 à 4 et n''' a une valeur de 1 à 4.

5. Produit d'addition selon l'une quelconque des revendications 1 à 4, dans lequel le constituant (A) est un éther polyglycidylique d'un composé (1) et le constituant (B) est un composé représenté par la formule la suivante : 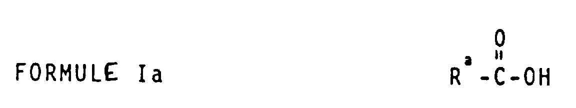 dans laquelle R^{a} représente un groupe hydrocarboné aliphatique monovalent ayant de 6 à 14 atomes de carbone, et les constituants (A) et (B) sont utilisés en des quantités qui fournissent un rapport des groupes acide carboxylique aux groupes époxyde de 0,02:1 à 0,15:1.

6. Produit d'addition selon l'une quelconque des revendications 1, 3 et 4, dans lequel le constituant (A) est un éther polyglycidylique d'un composé (2) et le constituant (B) est un composé représenté par la formule Ib suivante: 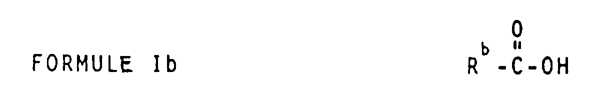 dans laquelle R^{b} représente un groupe hydrocarboné aliphatique monovalent ayant de 5 à 17 atomes de carbone, et les constituants (A) et (B) sont utilisés en des quantités qui fournissent un rapport des groupes acide carboxylique aux groupes époxyde de 0,02:1 à 0,15:1.

7. Produit d'addition selon la revendication 1, dans lequel (a) le constituant (A) est un éther diglycidylique de bisphénol A, un éther diglycidylique de bisphénol F, un éther diglycidylique d'un phénol-dicyclopentadiène ou un éther diglycidylique de thiodiglycol, et (b) le constituant (B) est l'acide laurique.

8. Composition thermodurcissable comprenant (1) au moins un produit d'addition selon l'une quelconque des revendications 1 à 7, et (2) une quantité durcissante d'au moins un agent de durcissement convenant pour le constituant (1).

9. Produit résultant du durcissement d'une composition contenant la composition thermodurcissable de la revendication 8.

10. Procédé de préparation d'une résine époxy présentant une faible viscosité, qui comprend la réaction de (A) au moins un éther polyglycidylique d'un composé choisi dans le groupe constitué de (1) un composé contenant en moyenne plus d'un groupe hydroxyle phénolique par molécule, et (2) un composé représenté par la formule HO-(-A-Y-)ₙ -A-OH, dans laquelle chaque A représente indépendamment un groupe hydrocarbyle divalent ayant de 2 à 6 atomes de carbone, chaque Y représente indépendamment -S- ou -S-S-, et n a une valeur de 1 à 11, avec (B) au moins un acide monocarboxylique aliphatique, étant entendu que (i) le rapport des groupes acide carboxylique aux groupes époxyde est de 0,01:1 à 0,2:1, (ii) ledit acide monocarboxylique aliphatique contient de 7 à 15 atomes de carbone dans le cas où l'on utilise un éther polyglycidylique d'un composé (1), et (iii) ledit acide monocarboxylique aliphatique contient de 6 à 18 atomes de carbone dans le cas où l'on utilise un éther polyglycidylique d'un composé (2).
